# NEUE EUROPÄISCHE PATENTSCHRIFT

(11) **EP 2 838 698 B2**
(45) Veröffentlichungstag und Bekanntmachung des Hinweises auf die Entscheidung über den Einspruch: **01.01.2020**
(45) Hinweis auf die Patenterteilung: 04.05.2016
(21) Anmeldenummer: 12735849.7
(22) Anmeldetag: 10.07.2012
(51) Int. Cl.: B25J 9/16

(54) **ROBOTERANORDNUNG UND VERFAHREN ZUM STEUERN EINES ROBOTERS**
ROBOT ARRANGEMENT AND METHOD FOR CONTROLLING A ROBOT
AGENCEMENT D'UN ROBOT ET PROCÉDÉ DE COMMANDE D'UN ROBOT

(43) Veröffentlichungstag der Anmeldung: 25.02.2015
(73) Patentinhaber: Siemens Aktiengesellschaft, 80333 München (DE)
(72) Erfinder: BURMEISTER, Sören, 90762 Fürth (DE); DÜRR, Matthias, 90473 Nürnberg (DE)
(86) Internationale Anmeldenummer: PCT/EP2012/063500
(87) Internationale Veröffentlichungsnummer: WO 2014/008929

(56) Entgegenhaltungen:
- WO-A1-2010/063319
- WO-A2-2008/014831
- CN-A- 102 323 822
- DE-A1- 10 216 023
- DE-A1- 10 324 627
- DE-A1-102007 007 576
- DE-A1-102007 033 891
- DE-B4- 10 320 343
- JP-A- 2010 120 139
- US-A1- 2008 161 970
- ONISHI K ET AL: "3D human posture estimation using the HOG features from monocular image", 19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ, 8. Dezember 2008 (2008-12-08), Seiten 1-4, XP031412201, ISBN: 978-1-4244-2174-9

## Beschreibung

Die Erfindung betrifft einen Roboter, welcher in einem Arbeitsmodus betreibbar ist, in welchem ein Teil des Roboters mit einer Geschwindigkeit bewegt wird, bei welcher ein Verletzungsrisiko für eine Person besteht, falls diese mit dem Teil kollidiert. Der Roboter weist eine Sicherungseinrichtung auf, welche den Arbeitsmodus deaktiviert, falls sich die Person in einem Aktionsbereich des beweglichen Teils befindet. Zu der Erfindung gehört auch ein Verfahren zum Steuern des Roboters. Einsetzbar ist der Roboter beispielsweise in einem Handling-System.

Handling-Systeme und ähnliche moderne Arbeitsplätze erfordern in der Fertigung immer häufiger Situationen, in denen eine effiziente Zusammenarbeit zwischen einem Menschen und einem Roboter erforderlich ist. Je enger diese Zusammenarbeit erfolgen kann, desto effizienter ist sie in der Regel. Das Arbeiten in einem gemeinsamen Arbeitsraum ist jedoch mit großen Gefahren für den Menschen verbunden. Handelsübliche Industrieroboter können eine derart hohe Masse der beweglichen Teile aufweisen und eine Bewegungsgeschwindigkeit derselben erzeugen, dass die Verletzungsgefahr bei einer Kollision mit einem Menschen für diesen äußerst hoch ist. Um hier Schutz zu gewährleisten, kann vorgesehen sein, durch eine Sensorik des Roboters (beispielsweise Näherungssensoren, Lichtschranken oder Kameras) zu erkennen, wenn ein Mensch zu nahe an den Roboter herantritt. Gegebenenfalls wird der Roboter dann verlangsamt, gestoppt oder wegbewegt, um so die Gefahrensituation zu entschärfen.

So ist beispielsweise in der Druckschrift CN 102 323 822 eine derartige Anordnung und Verfahren beschrieben, bei dem der Arbeitsmodus deaktiviert wird, falls eine Sicherungseinrichtung erkennt, dass eine Person in den Aktionsbereich eindringt. Hierbei wird durch eine Prädiktionseinrichtung der mögliche Aktionsbereich der eindringenden Person ermittelt, durch Orte, welche innerhalb eines vorgegebenen Zeitintervalls voraussichtlich erreichbar sind.

Aus der Patentschrift DE 102 16 023 sind bereits eine Vorrichtung und ein Verfahren zur kontrollierten Interaktion zwischen einer eigenbeweglichen Robotereinheit und einem Menschen bekannt. Dabei wird die Bewegung des Menschen erfasst durch Fortbewegungsgeschwindigkeit und Geschwindigkeitsgradient. Diese werden unter Zugrundelegung eines, den Menschen beschreibenden Verhaltensmodells bewertet und gegebenenfalls Steuersignale für die Robotereinheit generiert, welche eine Interaktion ermöglichen.

Die WO 2008/014831 beschreibt ein Verfahren zur Beobachtung einer Person in einem industriellen Umfeld. Mittels eines Mehrkamerasystems werden Bilddaten der Person erfasst und so die Position und Ausrichtung bestimmt. Anhand eines artikulierten, virtuellen 3D-Modells wird dann anhand des Bewegungsverhaltens ein Gefährdungspotential der Person ermittelt.

Ein Verfahren zur überwachten Kooperation zwischen einer Robotereinheit und einem Menschen wird auch in der Offenlegungsschrift DE 103 20 343 beschrieben. Um Kollisionen zu vermeiden wird die Position des Menschen innerhalb eines Arbeitsbereiches bestimmt, beispielsweise mit Hilfe einer Kamera oder eines Transponders. Der Robotereinheit wird ein Bewegungsmuster aufgeprägt, bei dem Richtung, Geschwindigkeit und Abstand in Abhängigkeit des Menschen bestimmt werden.

In der US 2008/0161970 wird eine Robotereinheit beschrieben, welche erkennen kann, wenn sich Personen in ihrem Arbeitsbereich befinden. Dabei wird der Aktionsbereich der erkannten Person anhand der festgestellten Position, Geschwindigkeit und Richtung bestimmt. Ziel ist es, zu verhindern, dass sich der Aktionsbereich der Person und der Arbeitsbereich der Robotereinheit zu einem bestimmten Zeitpunkt überschneiden.

Um die Gefahr einer Kollision sicher auszuschließen, muss der entsprechende Sicherheitsabstand verhältnismäßig groß gewählt werden, bei dessen Unterschreiten der Roboter verlangsamt wird. Nur so ist gewährleistet, dass der Roboter auch im Worst-Case, wenn die Person sehr schnell in den Aktionsbereich eines beweglichen Teils des Roboters eindringt, weil sie etwa stolpert, noch genügend Zeit bleibt, um das Teil rechtzeitig abbremsen zu können oder umzulenken. Da ein solcher Worst-Case allerdings nur sehr selten auftritt und im Normalfall deutlich kleinere Sicherungsabstände ausreichen würden, bedeuten solche Sicherheitsvorkehrungen, dass der Arbeitsmodus des Roboters, in welchem er ungehindert mit möglichst großer Geschwindigkeit seine Arbeit verrichtet, zu häufig unbegründet unterbrochen wird.

Eine Aufgabe der vorliegenden Erfindung ist es, ein effizientes Zusammenarbeiten einer Person und eines Roboters zu ermöglichen, ohne hierbei die Person zu gefährden.

Die Aufgabe wird durch ein Verfahren gemäß Patentanspruch 1 und durch eine Roboteranordnung gemäß Patentanspruch 14 gelöst. Vorteilhafte Weiterbildungen des erfindungsgemäßen Verfahrens sind durch die Unteransprüche gegeben.

Die Erfindung geht aus von einer Roboteranordnung, wie sie eingangs beschrieben wurde, bei welcher in einem Arbeitsmodus des Roboters ein Teil desselben mit einer Geschwindigkeit bewegt wird, bei welcher ein Verletzungsrisiko für eine Person besteht, falls diese mit dem Teil kollidiert. Die Roboteranordnung kann beispielsweise in einem Handlingsystem der beschriebenen Art eingesetzt werden kann. Zu der Roboteranordnung gehört der Roboter an sich mit seinem durch einen Antrieb des Roboters beweglichen Teil. Des Weiteren gehört zu der Roboteranordnung eine Sicherungseinrichtung mit einer Sensoreinheit zum Erfassen einer Position der Person. Bei der erfindungsgemäßen Roboteranordnung sind zusätzlich in der Sicherungseinrichtung eine Prädiktionseinheit für eine Positionsvorhersage und eine Kollisionsüberwachungseinheit für die Erkennung einer potentiellen Kollision vorgesehen. Die erfindungsgemäße Roboteranordnung ist dazu ausgelegt, eine der im Folgenden beschriebenen Ausführungsformen des erfindungsgemäßen Verfahrens durchzuführen.

Bei der erfindungsgemäßen Roboteranordnung sieht die Kollisionseinheit vor, den Arbeitsmodus zu deaktivieren, falls ein Eindringen der Person in einen Aktionsbereich des beweglichen Teils erkannt wird. Mit Aktionsbereich des Teils ist hierbei die Menge derjenigen Orte gemeint, die in einem vorbestimmten Zeitintervall potentiell von dem Teil angefahren werden können. Durch die Sensoreinheit wird dazu beispielsweise mittels einer Kamera ermittelt, wo sich die Person befindet, noch während sich die Person außerhalb des Aktionsbereichs des Teils befindet. Zusätzlich wird auch die Körperhaltung der Person ermittelt.

Durch die Prädiktionseinheit wird dann auch ein Aktionsbereich der Person ermittelt. Dieser ist durch Orte definiert, welche von der Person aus der ermittelten Körperhaltung heraus innerhalb eines vorgegebenen Zeitintervalls voraussichtlich von ihrer momentanen Position aus erreichbar sind. Es gibt nun also zwei Aktionsbereiche, denjenigen des beweglichen Teils des Roboters und denjenigen der Person.

Durch die Kollisionsüberwachungseinheit wird überprüft, ob sich die beiden Aktionsbereiche überschneiden. Ist dies der Fall, so wird der Roboter vom Arbeitsmodus in einen Sicherheitsmodus umgeschaltet, in welchem zur Vermeidung einer Verletzung der Person die Geschwindigkeit des Teils reduziert ist und/oder das Teil an der Person aktiv vorbeigeführt wird.

Der Vorteil des erfindungsgemäßen Verfahrens ist, dass der Arbeitsmodus des Roboters, in welchem er am effizientesten und damit wirtschaftlichsten arbeitet, nicht schon dann deaktiviert wird, wenn sich eine Person nur in der Nähe des Aktionsbereichs des beweglichen Teils befindet, wenn also ein bestimmter Sicherheitsabstand unterschritten wird. Vielmehr erfolgt nun eine Situationserkennung, durch welche überprüft wird, ob die Person überhaupt innerhalb des vorbestimmten Zeitintervalls in den Aktionsbereich des beweglichen Teils hineingelangen kann. Nur wenn dies der Fall ist, besteht auch wirklich die Gefahr einer Kollision. Andernfalls kann das bewegliche Teil mit unverminderter Geschwindigkeit weiterbewegt werden, d.h. der Roboter im Arbeitsmodus belassen werden. Der Kerngedanke der Erfindung ist dabei, dass Bewegungen des Menschen physischen Beschränkungen unterliegen, die ihm innerhalb eines bestimmten Zeitintervalls nur ein Fortkommen innerhalb eines begrenzten Aktionsradius ermöglichen. Dementsprechend gibt es eine Verzögerung zwischen dem Zeitpunkt, zu dem der Mensch dazu ansetzt, sich in eine Gefahrensituation zu begeben (indem er beispielsweise einen Schritt zur Seite oder eine unachtsame Armbewegung macht) und demjenigen Zeitpunkt, an dem die Gefahrensituation tatsächlich eintritt, weil sich der Mensch nun tatsächlich im Aktionsbereich des beweglichen Teils befindet. Mit einer hinreichend detaillierten Analyse der Körperhaltung der Person durch die oben erwähnte Sensoreinheit lassen sich also Gefahrensituationen frühzeitig erkennen und entschärfen. Um eine sichere Zusammenarbeit zwischen Roboter und Mensch zu ermöglichen, muss lediglich sichergestellt werden, dass der Mensch stets in einer Situation ist, in der zwischen Gefahrenerkennung und Gefahrensituation hinreichend Zeit für die Sicherungseinrichtung bleibt, um geeignete Gegenmaßnahmen zu ergreifen, also das Teil abzubremsen oder dessen Trajektorie um die Person herumzuführen. So kann in vorteilhafter Weise eine Kollisionssituation mit hohem Verletzungsrisiko (also z.B. bei unzureichend abgebremstem Roboter) verhindert werden.

Durch die Sensoreinheit kann zusätzlich auch zumindest ein Bewegungsvektor zu zumindest einer Gliedmaße der Person und/oder des Kopfes der Person ermittelt werden. Mit Bewegungsvektor ist hier ein Datensatz gemeint, durch welchen eine Richtung und ein Beschleunigungspotential des jeweiligen Körperteils beschrieben sind. Indem nicht nur die Haltung der Person, sondern auch die Geschwindigkeit der Gliedmaßen bzw. des Kopfes bekannt ist, lässt sich der Aktionsbereich der Person genauer und als Funktion der Zeit vorhersagen.

Erfindungsgemäss ist vorgesehen für die Ermittlung des Aktionsbereichs der Person durch die Sensoreinheit auch eine Muskelaktivität der Person zu ermitteln. Beispielsweise können hierzu in einem Arbeitsanzug der Person Elektroden zum Messen von elektrischen Potentialen an der Haut der Person bereitgestellt sein. Anhand der Muskelaktivität lässt sich eine bevorstehende Bewegung der Person bereits erkennen, bevor sie optisch beispielsweise mittels einer Kamera erfasst werden kann. Im Zusammenhang mit einer Deaktivierung eines Arbeitsmodus eines Roboters können nämlich bereits Bruchteile einer Sekunde, beispielsweise eine Viertelsekunde oder eine Drittelsekunde, ausreichend sein, um ein bewegliches Teil des Roboters so weit abzubremsen, dass die Verletzungsgefahr für eine Person signifikant reduziert ist. Daher ist jeder Zeitgewinn bei der Prädiktion einer Kollision ein signifikanter Vorteil.

Um eine Bewegungsrichtung der Person genauer vorherzusagen, sieht eine Ausführungsform des Verfahrens vor, für die Ermittlung des Aktionsbereichs der Person durch die Sensoreinheit auch eine Blickrichtung der Person zu ermitteln.

Eine andere Möglichkeit der Vorhersage der Richtung einer bevorstehenden Bewegung ist gegeben, wenn durch Drucksensoren der Sensoreinheit auf einen Boden, auf dem die Person steht, eine Gewichtsverteilung der Person erfasst wird. So ist beispielsweise erkennbar, ob eine Person im Begriff ist, einen Schritt nach vorne oder nach hinten zu machen.

Die genaue Analyse der Situation des Menschen, d.h. nicht nur die Ermittlung von dessen Position, sondern auch seiner aktuellen Haltung und Bewegungen, erfordern eine Möglichkeit, die Sensorsignale automatisiert dahingehend zu verarbeiten, dass die Absichten des Menschen von einer computerbasierten Verarbeitungseinheit erkannt und interpretiert werden können, um auf diese Weise Gefahrensituationen zu erkennen, bevor sie akut werden. Bevorzugt wird hierzu ein Skelettmodell verwendet, wie es an sich aus der Bildverarbeitung bekannt ist. Ein solches Skelettmodell wird durch die Sensoreinheit an die beobachtete Haltung der Person angepasst. Wird beispielsweise durch die Sensoreinheit die Person optisch erfasst, so kann durch einen iterativen Algorithmus das Skelettmodell z.B. durch Verändern von Kippwinkeln der Gelenke des Skeletts so lange verformt werden, bis sich die Haltung des Skelettmodells mit der beobachteten Haltung deckt. Hierdurch erhält man dann durch das angepasste Skelettmodell eine digitale Abbildung der Person in der aktuellen Körperhaltung.

Gemäß einer Weiterbildung dieses Verfahrens wird dann die durch das Skelettmodell repräsentierte Körperhaltung der Person einem von mehreren vorbestimmten Haltungstypen zugeordnet, also etwa dem Haltungstyp: "stillstehende Person" oder "Sprunghaltung". Für diese Zuordnung werden aktuelle Stellungswerte von Gelenkpunkten des Skelettmodells, also beispielsweise der Knick- oder Beugewinkel eines Knies des Skelettmodells, mit mehreren vorbestimmten Intervallen von möglichen Stellungswerten verglichen. So kann beispielsweise erkannt werden, ob das Knie gestreckt ist, leicht angewinkelt oder stark gebeugt. Aus der Gesamtheit der aktuellen Stellungswerte, also Informationen zu den Knickwinkeln beider Knie, der Krümmung der Wirbelsäule und der übrigen Gelenke des Skelettmodells, kann dann der Haltungstyp ermittelt werden. Auf Grundlage des ermittelten Haltungstyps kann dann durch die Prädiktionseinheit eine Bewegung der Person und damit deren Aktionsbereich ermittelt werden. Steht sie beispielsweise aufrecht und bewegt sich nicht, so kann sie in dem vorbestimmten Zeitintervall, beispielsweise 0,5 Sekunden oder 1 Sekunde, nicht so weit nach vorne gelangen als es ihr ausgehend von einer Sprunghaltung möglich wäre.

Gemäß einer Weiterbildung des Verfahrens wird durch die Sensoreinheit in ähnlicher Weise von dem Roboter zumindest dessen bewegliches Teil durch ein Skelettmodell nachgebildet. Hierdurch ergibt sich der Vorteil, dass kein expliziter Zugriff auf elektronische Positionsinformationen des Roboters nötig ist, dass also die Stellung des Roboters ohne eine Datenanbindung zum Roboter von einer externen Sensoreinheit möglich ist. Somit ist keine technische Anpassung des Roboters nötig, damit dieser seine Positionsinformation ausgeben kann. Auch die Sensoreinheit muss nicht für eine Kommunikation mit dem Roboter ausgelegt werden.

Bei dem erfindungsgemäßen Verfahren können neben Sensorinformationen noch weitere Informationen bei der Ermittlung des Aktionsbereichs berücksichtigt werden.

Führt die Person beispielsweise eine Montage eines Werkstücks durch, so sind hierzu in der Regel fest vorgeschriebene Arbeitsschritte auszuführen. Sind diese Arbeitsschritte bekannt, so kann beispielsweise vorhergesagt werden, wann die Person neben sich greifen wird, um ein Werkzeug aufzunehmen, das sie zum Ausführen des nächsten Arbeitsschrittes benötigt. Entsprechend kann gemäß einer Weiterbildung des Verfahrens durch die Prädiktionseinheit eine Bewegung der Person auf der Grundlage einer Arbeitsvorgangsbeschreibung vorhergesagt werden, durch welche eine Abfolge von Arbeitsschritten beschrieben ist, die von der Person in einer Umgebung des Roboters auszuführen sind.

In ähnlicher Weise kann gemäß einer anderen Weiterbildung des Verfahrens durch die Prädiktionseinheit eine Bewegung der Person auf der Grundlage von Verhaltensregeln vorhergesagt werden, welche für ein Verhalten der Person in einer Umgebung des Roboters festgelegt wurden, also z.B. Verkehrsregeln. Handelt es sich bei dem Roboter beispielsweise um ein Förderzeug, das in einer Werkshalle fährt, in welcher Personen stets Vorrang haben, so ist absehbar, dass eine Person nicht anhalten wird, wenn sie den Weg des Roboters kreuzt.

Bei der Berücksichtigung der Bewegung des Roboters selbst, also dessen beweglichen Teils, kann durch die Prädiktionseinheit die Programmierung des Roboters berücksichtigt werden, um so eine noch präzisere Gefahrenanalyse zu erhalten. So ist insbesondere vorgesehen, in diesem Fall den Aktionsbereich des beweglichen Teils als Funktion der Zeit beim Überprüfen der Überschneidung zugrunde zu legen. Da die Trajektorie des Teils anhand der Programmierung sehr genau ermittelbar ist, kann so beispielsweise vorhergesagt werden, dass sich das Teil von einem bestimmten Ort wegbewegt haben wird, wenn die Person diesen Ort erreicht. In einem solchen Fall muss der Arbeitsmodus also nicht deaktiviert werden.

Zur Ermittlung des Aktionsbereichs der Person wird, wie bereits ausgeführt, ein vorbestimmtes Zeitintervall zugrunde gelegt. Besonders zweckmäßig ist es hierbei, dass das Zeitintervall einer Übergangsdauer entspricht, welche der Roboter benötigt, um vom Arbeitsmodus in den Sicherheitsmodus zu wechseln. Es kann sich also beispielsweise um diejenige Zeitdauer handeln, die zum Abbremsen des beweglichen Teils auf eine Geschwindigkeit nötig ist, bei welcher eine Kollision mit der Person kein Verletzungsrisiko mehr birgt.

Um gegebenenfalls das Unterbrechen des Arbeitsmodus zu vermeiden, obwohl eine potentielle Kollision erkannt wurde, kann vorgesehen sein, dass der Roboter nicht sofort in den Sicherheitsmodus umgeschaltet wird, wenn eine Überschneidung der Aktionsbereiche der Person und des beweglichen Teils erkannt wird. Eine Weiterbildung des Verfahrens sieht stattdessen vor, durch die Kollisionsüberwachungseinheit eine Zeitdauer zu ermitteln, wann die Person den Aktionsbereich des Teils erreicht. Das Umschalten wird dann derart verzögert begonnen, dass der Umschaltvorgang erst bei Ablauf der ermittelten Zeitdauer beendet ist, aber nicht wesentlich früher. Die ermittelte Zeitdauer entspricht dann der Verzögerungszeit plus die Umschaltdauer. Mit anderen Worten wird beispielsweise das bewegte Teil nicht sofort bei Erkennen der Überschneidung der Aktionsbereiche angehalten, sondern erst dann, wenn die verbleibende Zeit bis zur vorhergesagten Kollision gerade noch ausreicht, um im Kollisionszeitpunkt das Teil z.B. zum Stillstand gebracht zu haben. Wird dann zwischenzeitlich, d.h. vor dem Umschalten, erkannt, dass die Person doch eine andere Bewegung ausführt, als zunächst vorhergesagt wurde, kann das Umschalten gegebenenfalls unterbleiben und der Roboter durchgehend im Arbeitsmodus weiterbetrieben werden.

Hierzu und auch im Zusammenhang mit den übrigen Weiterbildungen wird natürlich bevorzugt der Aktionsbereich der Person kontinuierlich, d.h. wiederholt zu vorbestimmten Zeitpunkten, ermittelt und entsprechend die Kollisionsüberwachung durchgeführt.

Im Folgenden wird die Erfindung noch einmal genauer anhand eines konkreten Ausführungsbeispiels erläutert. Dazu zeigt:
- FIG 1: eine schematische Darstellung eines Arbeitsraums, in welchem sich eine Person und eine Ausführungsform der erfindungsgemäßen Roboteranordnung befinden,
- FIG 2: eine schematische Darstellung des Arbeitsraums von FIG 1, wobei sich die Person in einer anderen Situation befindet,
- FIG 3: eine Skizze, in welcher Parameter eines Skelettmodells veranschaulicht sind, und
- FIG 4: ein Flussdiagramm zu einer Ausführungsform des erfindungsgemäßen Verfahrens.

Bei den im Folgenden erläuterten Beispielen stellen die beschriebenen Komponenten der Roboteranordnung und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

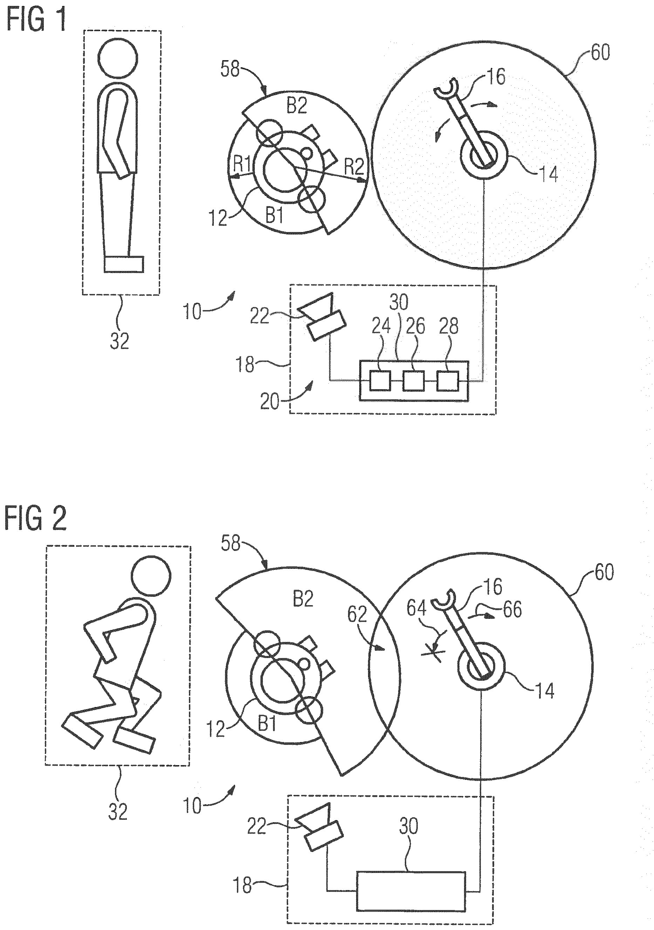

In FIG 1 ist eine Draufsicht auf einen Arbeitsbereich 10 gezeigt, in welchem sich eine Person 12 und ein Roboter 14 befinden. Ein Arm 16 des Roboters 14 wird durch einen (nicht dargestellten) Antrieb des Roboters 14 während eines Arbeitsprozesses verschwenkt. Die Person 12 muss sich während des Arbeitsprozesses ebenfalls in dem Arbeitsraum 10 aufhalten, weil sie beispielsweise Werkstücke dem Roboterarm 16 anreicht oder von diesem angereicht bekommt. Der Roboter 14 und die Person 12 müssen in dem Arbeitsraum 10 also eng zusammenarbeiten können. Die Person 12 soll hierbei aber nicht Gefahr laufen, durch den in der Regel schnell bewegten Roboterarm 16 getroffen und hierdurch verletzt zu werden. Es ist deshalb eine Sicherungseinrichtung 18 bereitgestellt, welche die Bewegungsgeschwindigkeit des Roboterarms 16 reduziert oder ihn sogar anhält oder aber auch die Bewegungsrichtung des Roboterarms 16 verändert, wann immer durch die Sicherungseinrichtung 18 erkannt wird, dass die Person 12 Gefahr läuft, mit dem schnell bewegten Roboterarm 16 zu kollidieren.

Die Sicherungseinrichtung 18 umfasst eine Sensorik 20, die beispielsweise eine Kamera 22 und eine Bildauswertung 24 umfassen kann, eine Prädiktionseinrichtung 26, welche für ein vorbestimmtes Zeitintervall Bewegungen der Person 12 voraussagt, und eine Kollisionsüberwachung 28, welche bei einer Vorhersage einer möglichen Kollision den Roboter 14 ansteuert, um zumindest eine der beschriebenen Schutzmaßnahmen einzuleiten. Die Bildauswertung 24, die Prädiktionseinrichtung 26 und die Kollisionsüberwachung 28 können beispielsweise in Form von Programmen bereitgestellt sein, die von einem Überwachungscomputer 30 ausgeführt werden.

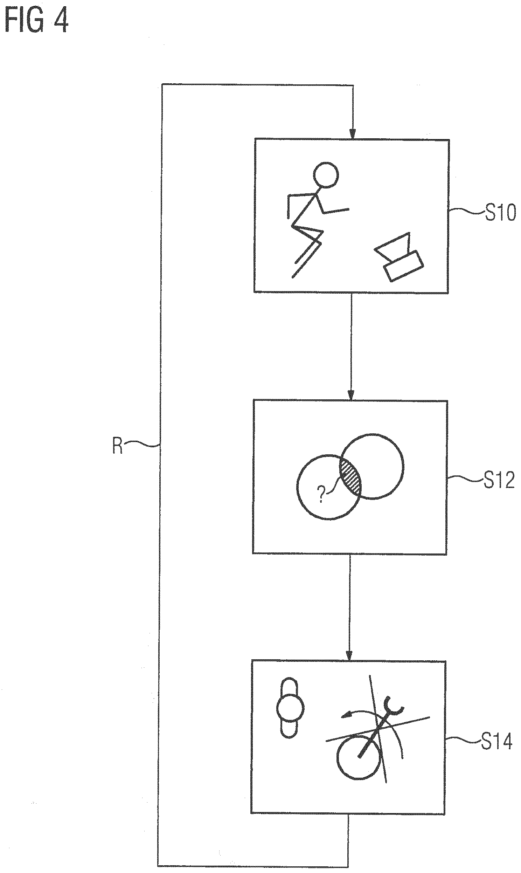

Diese Überwachungsroutine, welche durch die Sicherungseinrichtung 18 insgesamt ausgeführt wird, ist in dem Flussschaubild von FIG 4 veranschaulicht.

In einem Schritt S10 wird mit der Kamera 22 und einem Situationserkennungsalgorithmus der Bildauswertung 24 die Gefahrensituation nicht nur aufgrund der Nähe des Menschen zum Roboter beurteilt, sondern auch unter Berücksichtigung von Informationen über die aktuelle Körperhaltung und Bewegung der Person 12. Zur Veranschaulichung ist in FIG 1 das Kamerabild 32 gezeigt, welches die Person 12 aus dem Blickwinkel der Kamera 22 zeigt. Um die Körperhaltung der Person 12 zu erkennen, kann beispielsweise das System KINECT® des Unternehmens Microsoft® oder das System NiTE® des Unternehmens PrimeSense® verwendet werden. Erkennungssysteme dieser Art können auf der Grundlage des Kamerabildes 32 sowie anhand von Signalen weiterer Sensoren die Körperhaltung der Person 12 sowie die Bewegungsrichtungen der Gliedmaßen und des Kopfes der Person relativ zueinander sowie die absolute Bewegung der Person erkennen.

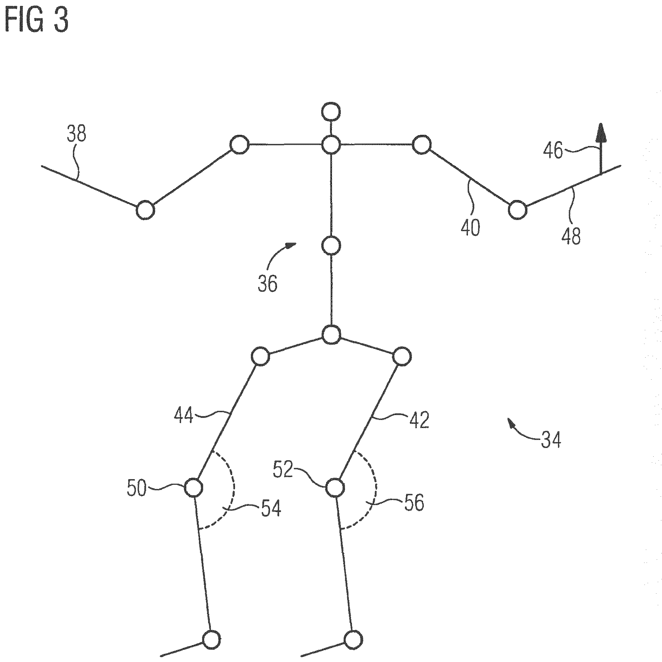

Die erkannten Stellungen der Körperteile und die erkannten Bewegungen werden mittels eines Skelettmodells beschrieben. In FIG 3 ist ein Parametersatz eines solchen Skelettmodells veranschaulicht. Durch das Skelettmodell 34 können Informationen zu beispielsweise dem Körperrumpf 36, den Armen 38, 40 und den Beine 42, 44 wiedergegeben sein. In dem Skelettmodell 34 der FIG 3 ist beispielhaft zu dem linken Arm 40 ein Bewegungsvektor 46 angegeben, welcher besagt, dass der Unterarm 48 des linken Arms 40 sich nach oben mit einer bestimmten Geschwindigkeit bewegt. Zu einzelnen Gelenkpunkten 50, 52 kann angegeben sein, in welchem Beugewinkel 54, 56 die Gelenke gebeugt sind. In FIG 3 ist der Übersichtlichkeit halber nur zu den Kniegelenken 50, 52 ein Bezugszeichen angegeben.

Das Skelettmodell 34 wird durch die Bildauswertung 24 mit dem Abbild der Person 12 im Kamerabild 32 in Deckung gebracht. Hierzu werden z.B. die Werte der Parameter des Skelettmodells, also etwa die Beugewinkel 54, 56 verändert und die jeweils resultierende Haltung des Skeletts mit der Körperhaltung der Person 12 im Kamerabild 32 verglichen, bis die Haltung des Skeletts mit derjenigen der Person 12 übereinstimmt. Bei der Bildauswertung 24 kann es sich auch um eine proprietäre Bildauswertung handeln, z.B. das Produkt Kinect-SDK ® oder Prime Sense NITE ®.

Anhand eines anschließenden Vergleichs der Werte für z.B. die Beugewinkel 54, 56 mit einer Mehrzahl von vorbestimmten Winkelintervallen wird durch die Bilderkennung 24 erkannt, dass die Knie 50, 52 gestreckt sind und die Person also gerade steht. Zu den Gliedmaßen 38 bis 44 und dem Kopf der Person erkennt die Bildauswertung 24, dass die Bewegungsvektoren sehr klein sind. Auch ein absoluter Bewegungsvektor für die Gesamtkörperbewegung ist gleich Null. All diesen Angaben ordnet die Bildauswertung 24 einen Haltungstyp zu, der hier als "stillstehende Person" bezeichnet ist. Diese Information wird an die Prädiktionseinheit 26 übertragen. Für die Haltungserkennung und Bewegungserkennung können auch spezielle Sensoren zum Messen relevanter Muskelaktivitäten der Person 12 vorgesehen sein.

Durch die Prädiktionseinheit 26 wird überprüft, ob die Person sich in eine Gefahrensituation hineinbewegt, sie also dem Roboterarm 16 zunahe zu kommen droht. Durch Sensoren für die Muskelaktivitäten ist es sogar möglich, eine noch frühere Erkennung durchzuführen. Durch die Prädiktionseinheit 26 werden für die Auswertung der Situation anhand der Informationen über die Körperhaltung und Bewegung der Person 12 Aktionsradien R1, R2 bestimmt. Der Betrag der Radien R1, R2 kann z.B. diejenige Distanz sein, welche die Person 12 aus ihrer momentanen Körperhaltung heraus und unter Berücksichtigung der momentanen Bewegung in einem vorgegebenen Zeitintervall mit ihrem ganzen Körper oder aber auch nur mit einer Gliedmaße zurücklegen kann, wenn sie die größte Anstrengung hierzu unternimmt oder auch beispielsweise stolpert und sich deshalb schnell bewegt. Durch die Aktionsradien R1, R2 sind zwei Teilbereiche B1, B2 definiert, welche die mögliche Bewegung der Person 12 nach hinten (B1) bzw. nach vorne (B2) beschreiben. Insgesamt ist durch die Teilbereiche B1, B2 ein Aktionsbereich 58 der Person 12 beschrieben. Der Aktionsbereich 58 kann also durch das physisch maximal mögliche Bewegungsverhalten der Person 12 bestimmt sein.

Das für die Ermittlung des Aktionsbereichs 58 zugrunde gelegte Zeitintervall ist auf den Wert gesetzt, welcher der Zeitdauer entspricht, welche der Roboter benötigt, um sich in einen ungefährlichen Zustand zu versetzen, also beispielsweise den Roboterarm 16 zum Stillstand zu bringen. Das Zeitintervall ist im Folgenden als Beobachtungsintervall bezeichnet.

Auch dem Roboter 14 wird ein Aktionsbereich 60 zugeordnet, welcher beispielsweise durch die möglichen Bewegungen des Roboterarms 16 und durch die Größe der von dem Roboterarm 16 währenddessen transportierten (nicht dargestellten) Werkstücke bestimmt sein kann.

Die Prädiktionseinheit 26 kann dann eine dynamische und situationsabhängige Gefährdungsklassifizierung durchführen. So kann in einem Schritt S12 vorgesehen sein, dass durch die Prädiktionseinheit 26 auf der Grundlage der von der Bildauswertung 24 empfangenen Daten eine Risikoklasse bestimmt wird, in welcher sich der Mensch derzeit befindet. So kann eine Risikoklasse RK0 bestimmt sein, die keine Gefahr einer Kollision anzeigt. Auch im sogenannten Worst-Case kann innerhalb des Beobachtungsintervalls keine Situation eintreten, in der eine Kollisionsgefahr besteht. Eine Risikoklasse RK1 besagt, dass keine akute Gefahr einer Kollision besteht, die Person 12 aber die Möglichkeit hat, schnell in Kollisionsräume einzudringen, so dass der Roboter entsprechend vorbereitet sein muss. Diese Risikoklasse kann in Abhängigkeit von der Zeit, die der Mensch mindestens zum Eindringen in den Gefahrenraum benötigt, weiter unterteilt sein. So kann der Roboter beispielsweise weitgehend ungestört arbeiten, wenn dieser Übergang zwar theoretisch möglich ist, der Mensch aber noch keine Anstalten gemacht hat, diesen Übergang zu vollziehen und deshalb sicher ist, dass ein Übergang rechtzeitig erkannt werden kann. Sitzt beispielsweise eine Person an einem Arbeitstisch und hat beide Beine auf dem Boden, so besteht prinzipiell keine Gefahr, dass die Person sich plötzlich bewegt; hat die Person aber gerade ihr rechtes Bein leicht angehoben und bewegt sie dieses nach rechts, so deutet dies an, dass sie mit einem Schritt nach rechts in einen Gefahrenraum kommen könnte. Daher sollte in einer solchen Situation ein bewegliches Teil eines Roboters in einem Schritt S14 bereits jetzt entschleunigt werden.

Eine Risikoklasse RK2 besagt, dass sich die Person bereits zu nahe an dem Roboter befindet, also hier z.B. im Aktionsbereich 60, so dass akute Kollisionsgefahr besteht. Der Roboter muss bei Erkennen der Risikoklasse RK2 so schnell wie möglich in einen sicheren Modus verbracht werden, also z.B. entschleunigt werden oder sogar angehalten. Wenn nicht bereits in der Übergangsphase, also während des Vorliegens der Risikoklasse RK1, Gegenmaßnahmen eingeleitet wurden, wird eventuell die Reaktionsgeschwindigkeit nicht ausreichen, so dass schwere Verletzungen entstehen können. Der Prozess aus Situationserkennung, Gefährdungsklassifizierung und gegebenenfalls Maßnahmenergreifung der Sicherungseinrichtung 18 wird kontinuierlich durchgeführt, d.h. es gibt eine Rekursion R.

In dem in FIG 1 veranschaulichten Beispiel ist der Aktionsbereich 58 verhältnismäßig klein, da die Person 12 ruhig steht. Innerhalb des Beobachtungsintervalls kann die Person 12 also nicht in den unmittelbaren Gefahrenbereich des Roboters kommen, der durch den Aktionsbereich 60 definiert ist. Dies wird daran erkannt, dass sich die Aktionsbereiche 58, 60 nicht überscheiden. Daher kann der Roboter 14 ungestört arbeiten, d.h. er muss die Bewegungen seines Roboterarms 16 nicht verlangsamen, so lange die Person 12 ihre Körperhaltung beibehält und sich nicht ihr Aktionsbereich 58 ändert. Durch die Rekursion R wird die Berechnung kontinuierlich durchgeführt, so dass die Risikoklassifizierung stets aktuell ist. Bei reiner Verwendung einer bisherigen Standardtechnologie mit reiner Abstandsmessung wäre dagegen diese Situation der Risikoklasse RK2 zuzuordnen, da in diesem Fall diese "Grauzone" nicht genutzt werden könnte. Erst durch Verwendung zusätzlicher Methoden basierend dem erfindungsgemäßen Ansatz kann diese RK1 genauer analysiert werden, um zu entscheiden, welche Situation als "keine Gefahr" bzw. als "Handlungen notwendig" klassifiziert werden kann.

Mögliche Gegenmaßnahmen, die im Schritt S14 getroffen werden können, sind eine Limitierung der Geschwindigkeit und der durch den Roboterarm 16 erzeugten Kräfte. Es können auch Warnsignale ausgegeben werden. Für die Geschwindigkeitsreduzierung können auch zulässige Grenzwerte für die aktuelle Bewegungstrajektorie des Roboterarms 16 abgeleitet werden.

Anhand von FIG 2 ist beispielhaft erläutert, wie die Sicherungseinrichtung 18 bei einem Wechsel der Körperhaltung der Person 12 reagieren kann. In dem Beispiel von FIG 2 hat die Person 12 eine Sprunghaltung angenommen. Beim Anpassen des Skelettmodells 34 an die in dem Kamerabild 32 erkennbare Körperhaltung der Person 12 ergibt sich für die Beugewinkel 54, 56 der Knie 50, 52 ein sehr kleiner Wert, d.h. ein spitzer Winkel. Auch die übrigen Beugewinkel der Gelenke sind entsprechend verändert. Durch Vergleichen der aktuellen Werte für die einzelnen Beugewinkel mit den vorbestimmten Intervallen für die Winkelwerte wird durch die Bildauswertung 24 insgesamt erkannt, dass die Person sich in einer kauernden Haltung befindet und zu einem Sprung ansetzen könnte. Entsprechend wird die Gesamtheit der aktuellen Werte der Parameter des Skelettmodells 34 im Schritt S10 einem Haltungstyp "Sprunghaltung" zugeordnet.

Durch die Prädiktionseinheit 26 wird ausgehend von der Sprunghaltung im Schritt S12 ein Aktionsbereich 58 der Person 12 ermittelt, der größer ist als der Aktionsbereich, wie er sich für eine stillstehende Person ergibt. Grund dafür ist, dass ausgehend von der Sprunghaltung innerhalb des Beobachtungsintervalls es für die Person 12 möglich ist, eine größere Distanz zurückzulegen.

Die Kollisionsüberwachung 28 erkennt, dass es einen Überschneidungsbereich 62 zwischen dem Aktionsbereich 58 der Person und dem Aktionsbereich 60 des Roboters 13 gibt. Es liegt also die Risikoklasse RK1 vor, nämlich eine mögliche Kollision. Entsprechend werden durch die Kollisionsüberwachung 28 z.B. Bewegungen 64 des Roboterarms 16 in Richtung auf den Überschneidungsbereich 62 hin in dem vorliegenden Beispiel blockiert. Die übrigen Bewegungen 66 kann der Roboterarm 16 dagegen ungehindert ausführen. So ergibt sich ein minimaler Eingriff in die Bewegungsfreiheit des Roboterarms 16.

Durch das Beispiel ist gezeigt, wie die Person 12 und der Roboter 14 ungestört eng nebeneinander arbeiten können und hierbei der Roboter 14 mit einer hohen Effizient betrieben werden kann, ohne dass die Sicherheit des Menschen darunter leiden muss.

### Bezugszeichenliste

- 10: Arbeitsraum
- 12: Person
- 14: Roboter
- 16: Roboterarm
- 18: Sicherungseinrichtung
- 20: Sensoreinheit
- 22: Kamera
- 24: Bildauswertung
- 26: Prädiktionseinheit
- 28: Kollisionsüberwachung
- 30: Überwachungscomputer
- 32: Kamerabild
- 34: Skelettmodell
- 36: Körperrumpf
- 38 bis 44: Gliedmaßen
- 46: Bewegungsvektor
- 48: Unterarm
- 50, 52: Kniegelenk
- 54, 56: Beugewinkel
- 58: Aktionsbereich der Person
- 60: Aktionsbereich des Roboters
- 62: Überschneidungsbereich
- 64: Blockierte Bewegung
- 66: Zugelassene Bewegung
- B1, B2: Bewegungsbereich
- R: Rekursion
- R1, R2: Aktionsradius
- S10 bis S14: Verfahrensschritt

## Patentansprüche

1. Verfahren zum Steuern eines Roboters (14), welcher in einem Arbeitsmodus betreibbar ausgestaltet ist, in welchem ein Teil (16) des Roboters (14) mit einer Geschwindigkeit bewegt wird, bei welcher ein Verletzungsrisiko für eine Person (12) besteht, falls die Person (12) mit dem Teil (16) kollidiert, wobei der Arbeitsmodus deaktiviert wird, falls durch eine Sicherungseinrichtung (18) erkannt wird, dass die Person (12) in einen Aktionsbereich (60) des beweglichen Teils (16) eindringt,
mit den Schritten:
- durch eine Sensoreinheit (20) der Sicherungseinrichtung (18) Ermitteln (S10) einer Position und einer Körperhaltung der Person (12), während sich die Person (12) außerhalb des Aktionsbereichs (60) des Teils (16) befindet,
- durch eine Prädiktionseinheit (26) der Sicherungseinrichtung (18) Ermitteln (S12) eines Aktionsbereichs (58) der Person (12), welcher durch Orte definiert ist, welche von der Person (12) aus der ermittelten Körperhaltung heraus innerhalb eines vorgegebenen Zeitintervalls voraussichtlich erreichbar sind,
- durch eine Kollisionsüberwachungseinheit (28) der Sicherungseinrichtung (18) Überprüfen (S14), ob sich der Aktionsbereich (58) der Person (12) und der Aktionsbereich (60) des beweglichen Teils (16) überschneiden (62) und gegebenenfalls Umschalten des Roboters (14) vom Arbeitsmodus in einen Sicherheitsmodus, in welchem zur Vermeidung einer Verletzung der Person (12) die Geschwindigkeit des Teils (16) reduziert ist und/oder das Teil (16) an der Person (12) vorbeigeführt wird
**dadurch gekennzeichnet, dass**
für die Ermittlung des Aktionsbereichs (58) der Person (12) durch die Sensoreinheit (20) eine Muskelaktivität der Person (12) ermittelt wird.

2. Verfahren nach Anspruch 1, **dadurch gekennzeichnet, dass** für die Ermittlung des Aktionsbereichs (58) der Person (12) durch die Sensoreinheit (20) zumindest ein Bewegungsvektor (46) zu zumindest einer Gliedmaße (38 bis 44) und/oder des Kopfes der Person (12) ermittelt wird.

3. Verfahren nach einem der vorhergehenden Ansprüche, **dadurch gekennzeichnet, dass** für die Ermittlung des Aktionsbereichs (58) der Person (12) durch die Sensoreinheit (20) eine Blickrichtung der Person (12) ermittelt wird.

4. Verfahren nach einem der vorhergehenden Ansprüche, **dadurch gekennzeichnet, dass** für die Ermittlung des Aktionsbereichs (58) durch Drucksensoren der Sensoreinheit (20) auf einem Boden, auf welchem die Person (12) steht, eine Gewichtsverteilung der Person (12) erfasst wird.

5. Verfahren nach einem der vorhergehenden Ansprüche, **dadurch gekennzeichnet, dass** durch die Sensoreinheit (20) ein Skelettmodell (34) an eine beobachtete Körperhaltung der Person (12) angepasst wird.

6. Verfahren nach Anspruch 5, **dadurch gekennzeichnet, dass** aktuelle Stellungswerte (54, 56) von Gelenkpunkten (50, 52) des Skelettmodells (34) mit vorbestimmten Intervallen von möglichen Stellungswerten verglichen werden und die Gesamtheit der aktuellen Stellungswerte (54, 56) einem von mehreren vorbestimmten Haltungstypen zugeordnet wird.

7. Verfahren nach einem der vorhergehenden Ansprüche, **dadurch gekennzeichnet, dass** durch die Sensoreinheit (20) von dem Roboter (14) zumindest dessen bewegliches Teil (16) durch ein Skelettmodell nachgebildet wird.

8. Verfahren nach einem der vorhergehenden Ansprüche, **dadurch gekennzeichnet, dass** durch die Prädiktionseinheit (26) eine Bewegung der Person (12) auf der Grundlage einer Arbeitsvorgangsbeschreibung vorhergesagt wird, durch welche eine Abfolge von Arbeitsschritten beschrieben ist, die von der Person (12) in einer Umgebung (10) des Roboters (14) auszuführen sind.

9. Verfahren nach einem der vorhergehenden Ansprüche, **dadurch gekennzeichnet, dass** durch die Prädiktionseinheit (26) eine Bewegung der Person (12) auf der Grundlage von Verhaltensregeln vorhergesagt wird, welche für ein Verhalten der Person (12) in einer Umgebung (10) des Roboters (16) festgelegt wurden.

10. Verfahren nach einem der vorhergehenden Ansprüche, **dadurch gekennzeichnet, dass** durch die Prädiktionseinheit (26) eine Bewegung des Teils (16) des Roboters (14) auf Grundlage einer Programmierung des Roboters (14) ermittelt wird und der Aktionsbereich (60) des Teils (16) als Funktion der Zeit beim Überprüfen der Überschneidung (62) zugrunde gelegt wird.

11. Verfahren nach einem der vorhergehenden Ansprüche, **dadurch gekennzeichnet, dass** durch die Prädiktionseinheit (26) als Zeitintervall eine Übergangsdauer verwendet wird, welche der Roboter benötigt, um vom Arbeitsmodus in den Sicherheitsmodus zu wechseln.

12. Verfahren nach einem der vorhergehenden Ansprüche, **dadurch gekennzeichnet, dass** durch die Kollisionsüberwachungseinheit (28) eine Zeitdauer bis zum voraussichtlichen Eindringen der Person in den Aktionsbereiche (60) des Teils ermittelt wird und das Umschalten derart verzögert begonnen wird, dass bei Ablauf der Zeitdauer der Umschaltvorgang beendet ist.

13. Verfahren nach einem der vorhergehenden Ansprüche, **dadurch gekennzeichnet, dass** das Ermitteln des Aktionsbereichs (58) der Person (12) und die Kollisionsüberwachung wiederholt (R) zu vorbestimmten Zeitpunkten durchgeführt wird.

14. Roboteranordnung für ein Handling-System, umfassend:
- einen Roboter (16) mit einem durch einen Antrieb des Roboters (14) beweglichen Teil (16),
- eine Sicherungseinrichtung (18) mit einer Sensoreinheit (20) zum Erfassen einer Position einer Person (12),
**dadurch gekennzeichnet, dass** die Sicherungseinrichtung (18) zusätzlich eine Prädiktionseinheit (26) und eine Kollisionsüberwachungseinheit (28) aufweist und dazu ausgelegt ist, ein Verfahren nach einem der vorhergehenden Ansprüche durchzuführen.

## Claims

1. Method for controlling a robot (14), which is embodied to be operable in a work mode in which part (16) of the robot (14) is moved at a speed in which there is a risk of injury to a person (12) if the person (12) collides with the part (16), wherein the work mode is deactivated if a safeguarding apparatus (18) identifies that the person (12) enters an action range (60) of the movable part (16),
comprising the following steps:
- establishing (S10) a position and body posture of the person (12) by a sensor unit (20) of the safeguarding apparatus (18) while the person (12) is situated outside of the action range (60) of the part (16),
- establishing (S12) an action range (58) of the person (12) by a prediction unit (26) of the safeguarding apparatus (18), said action range being defined by locations which are expected to be reachable within a predetermined time interval by the person (12) from the established body posture,
- checking (S14) whether the action range (58) of the person (12) and the action range (60) of the movable part (16) intersect (62) by means of a collision monitoring unit (28) of the safeguarding apparatus (18) and, if necessary, switching the robot (14) from the work mode into a safety mode, in which the speed of the part (16) is reduced and/or the part (16) is guided past the person (12) in order to avoid injury to the person (12),
**characterized in that** muscle activity of the person (12) is established by the sensor unit (20) for establishing the action range (58) of the person (12).

2. Method according to Claim 1, **characterized in that** at least one movement vector (46) of at least one limb (38 to 44) and/or of the head of the person (12) are established by the sensor unit (20) for establishing the action range (58) of the person (12).

3. Method according to one of the preceding claims, **characterized in that** a direction of view of the person (12) is established by the sensor unit (20) for establishing the action range (58) of the person (12).

4. Method according to one of the preceding claims, **characterized in that** a weight distribution of the person (12) is registered by pressure sensors of the sensor unit (20) on a floor on which the person (12) stands, for establishing the action range (58).

5. Method according to one of the preceding claims, **characterized in that** the sensor unit (20) fits a skeleton model (34) to an observed body posture of the person (12).

6. Method according to Claim 5, **characterized in that** current position values (54, 56) of joint points (50, 52) of the skeleton model (34) are compared to predetermined intervals of possible position values and the totality of the current position values (54, 56) is assigned to one of a plurality of predetermined posture types.

7. Method according to one of the preceding claims, **characterized in that** at least the movable part (16) of the robot (14) is simulated by a skeleton model by the sensor unit (20).

8. Method according to one of the preceding claims, **characterized in that** the prediction unit (26) predicts a movement of the person (12) on the basis of a work procedure description, which describes a sequence of work steps which are to be carried out by the person (12) in surroundings (10) of the robot (14).

9. Method according to one of the preceding claims, **characterized in that** the prediction unit (26) predicts a movement of the person (12) on the basis of behavior rules which were prescribed for a behavior of the person (12) in surroundings (10) of the robot (16).

10. Method according to one of the preceding claims, **characterized in that** the prediction unit (26) establishes a movement of the part (16) of the robot (14) on the basis of programming of the robot (14) and the action range (60) of the part (16) as a function of time forms the basis of the check of the intersection (62).

11. Method according to one of the preceding claims, **characterized in that** a transition duration, which the robot requires to change from the work mode into the safety mode, is used as a time interval by the prediction unit (26).

12. Method according to one of the preceding claims, **characterized in that** the collision monitoring unit (28) establishes a time duration until the predicted entry of the person into the action range (60) of the part and the switchover is started with such a delay that the switching process is complete when the time duration expires.

13. Method according to one of the preceding claims, **characterized in that** establishing of the action range (58) of the person (12) and the collision monitoring is performed repeatedly (R) at predetermined times.

14. Robot arrangement for a handling system, comprising:
- a robot (16) with a part (16) that is movable by a drive of the robot (14),
- a safeguarding apparatus (18) comprising a sensor unit (20) for registering a position of a person (12),
**characterized in that** the safeguarding apparatus (18) additionally comprises a prediction unit (26) and a collision monitoring unit (28) and is configured for performing a method according to one of the preceding claims.

## Revendications

1. Procédé de commande d'un robot (14) configuré pour être utilisé dans un mode de fonctionnement dans lequel une pièce (16) du robot (14) est mue à une vitesse présentant un risque de blessure pour une personne (12) si la personne (12) entre en collision avec la pièce (16), le mode de fonctionnement étant désactivé si un dispositif de sécurité (18) détecte que la personne (12) pénètre dans une zone d'action (60) de la pièce mobile (16),
comprenant les étapes :
- par une unité de détection (20) du dispositif de sécurité (18) : déterminer (S10) une position et une posture de la personne (12) pendant que la personne (12) se trouve hors de la zone d'action (60) de la pièce (16),
- par une unité de prédiction (26) du dispositif de sécurité (18) : déterminer (S12) une zone d'action (58) de la personne (12), laquelle zone est définie par des lieux que la personne (12) peut vraisemblablement atteindre à partir de la posture déterminée dans un intervalle de temps prédéfini,
- par une unité de surveillance de collision (28) du dispositif de sécurité : vérifier (S14) si la zone d'action (58) de la personne (12) et la zone d'action (60) de la pièce mobile (16) se chevauchent (62) et, le cas échéant, commuter le robot (14) du mode de fonctionnement dans un mode de sécurité dans lequel, de manière à éviter une blessure de la personne (12), la vitesse de la pièce (16) est réduite et/ou la pièce (16) passe devant la personne (12),
**caractérisé en ce que**
pour la détermination de la zone d'action (58) de la personne (12) par l'unité de détection (20), une activité musculaire de la personne (12) est déterminée.

2. Procédé selon la revendication 1, **caractérisé en ce que** pour la détermination de la zone d'action (58) de la personne (12) par l'unité de détection (20), au moins un vecteur de mouvement (46) pour au moins un des membres (38 à 44) et/ou la tête de la personne (12) est déterminé.

3. Procédé selon l'une des revendications précédentes, **caractérisé en ce que** pour la détermination de la zone d'action (58) de la personne (12) par l'unité de détection (20), une direction du regard de la personne (12) est déterminée.

4. Procédé selon l'une des revendications précédentes, **caractérisé en ce que** pour la détermination de la zone d'action (58) par des capteurs de pression de l'unité de détection (20) sur un sol sur lequel se trouve la personne (12), une répartition du poids de la personne (12) est détectée.

5. Procédé selon l'une des revendications précédentes, **caractérisé en ce que** l'unité de détection (20) adapte un modèle de squelette (34) à une posture observée de la personne (12).

6. Procédé selon la revendication 5, **caractérisé en ce que** des valeurs de position actuelles (54, 56) de points d'articulation (50, 52) du modèle de squelette (34) sont comparées à des intervalles prédéterminés de valeurs de position possibles et l'ensemble des valeurs de position actuelles (54, 56) est associé à l'un d'une pluralité de types de posture prédéterminés.

7. Procédé selon l'une des revendications précédentes, **caractérisé en ce que** l'unité de détection (20) reproduit du robot (14) au moins la pièce mobile (16) de celui-ci par un modèle de squelette.

8. Procédé selon l'une des revendications précédentes, **caractérisé en ce que** l'unité de prédication (26) prédit un mouvement de la personne (12) sur la base d'une description d'opération décrivant une succession d'étapes de travail que la personne (12) doit exécuter dans un environnement (10) du robot (14).

9. Procédé selon l'une des revendications précédentes, **caractérisé en ce que** l'unité de prédication (26) prédit un mouvement de la personne (12) sur la base de règles de comportement ayant été fixées pour un comportement de la personne (12) dans un environnement (10) du robot (16).

10. Procédé selon l'une des revendications précédentes, **caractérisé en ce que** l'unité de prédication (26) détermine un mouvement de la pièce (16) du robot (14) sur la base d'une programmation du robot (14) et **en ce que** la zone d'action (60) de la pièce (16) est prise en compte en fonction du temps lors de la vérification du chevauchement (62).

11. Procédé selon l'une des revendications précédentes, **caractérisé en ce que** l'unité de prédication (26) utilise comme intervalle de temps une durée de transition que nécessite le robot pour passer du mode de fonctionnement en mode de sécurité.

12. Procédé selon l'une des revendications précédentes, **caractérisé en ce que** l'unité de surveillance de collision (28) détermine un laps de temps jusqu'à la pénétration vraisemblable de la personne dans la zone d'action (60) de la pièce et **en ce que** la commutation est lancée avec un tel retard que l'opération de commutation est terminée à l'expiration du laps de temps.

13. Procédé selon l'une des revendications précédentes, **caractérisé en ce que** la détermination de la zone d'action (58) de la personne (12) et la surveillance de collision sont réalisées de manière répétée (R) à des instants prédéterminés.

14. Agencement de robot pour un système de manutention, comprenant :
- un robot (16) comprenant une pièce (16) pouvant être mue par un entraînement du robot (14),
- un dispositif de sécurité (18) comprenant une unité de détection (20) pour détecter une position d'une personne (12),
**caractérisé en ce que** le dispositif de sécurité (18) comprend en outre une unité de prédiction (26) et une unité de surveillance de collision (28) et est conçu pour mettre en œuvre un procédé selon l'une des revendications précédentes.
